# FASCICULE DE BREVET EUROPEEN

(11) **EP 2 462 804 B1**
(45) Date de publication et mention de la délivrance du brevet: **27.11.2013**
(21) Numéro de dépôt: 11192614.3
(22) Date de dépôt: 08.12.2011
(51) Int. Cl.: A01M 27/00

(54) **Dispositif pyrotechnique à mise à feu sécurisée**
Pyrotechnische Vorrichtung mit gesicherter Zündung
Pyrotechnic device with safe firing

(30) Priorité: 09.12.2010 FR 1060330
(43) Date de publication de la demande: 13.06.2012
(73) Titulaire: Crea, 74130 Bonneville (FR)
(72) Inventeur: BODO, Lionel, 74130 Ayze (FR)
(74) Mandataire: Poncet, Jean-François

(56) Documents cités:
- WO-A1-00/11945
- FR-A1- 2 719 192
- FR-A1- 2 832 029
- GB-A- 2 354 693
- US-A- 4 074 456

## Description

La présente invention concerne un dispositif destiné à la destruction des animaux creusant des galeries tels qu'une taupe, et concerne plus particulièrement un dispositif pyrotechnique destiné à détruire des animaux par la mise à feu d'une charge pyrotechnique.

Un tel dispositif est par exemple connu du document FR 2 832 029. Un tel dispositif comprend généralement des moyens de détection de l'animal et un boîtier contenant :
- un circuit électrique de mise à feu comprenant un contacteur de mise à feu piloté par les moyens de détection,
- des moyens d'interruption du circuit électrique de mise à feu permettant sélectivement d'interrompre ou de rétablir la continuité d'un tronçon de circuit électrique de mise à feu.

Les moyens de détection sont généralement installés dans la cheminée ouverte d'une galerie tandis que la charge pyrotechnique est installée dans la galerie. Lorsque la taupe vient reboucher la cheminée restée ouverte, celle-ci repousse la terre et déplace alors les moyens de détection, ce qui provoque la fermeture du contacteur de mise à feu et la mise à feu de la charge pyrotechnique. L'onde de choc provoquée par la déflagration tue alors l'animal.

Ce type de piège est efficace et permet, par l'enterrement de la charge pyrotechnique, d'éviter de blesser un utilisateur ou de causer des dégâts en surface.

Toutefois, il existe un risque de déclenchement involontaire du dispositif lors de sa mise en place et du branchement de la charge pyrotechnique. Pour limiter ce risque, des systèmes de sécurité ont été proposés.

Le document EP 1 109 446 décrit à cet effet un dispositif de sécurité, constitué d'une pièce mobile dont l'une des positions s'oppose mécaniquement à l'établissement du contact de mise à feu, et qui est capable d'interdire tout déclenchement intempestif de la charge pyrotechnique au cours des opérations de branchement de la charge pyrotechnique ou lors de l'installation ou du retrait du dispositif pyrotechnique.

Le document FR 2 897 510 décrit un système de sécurité électronique agencé pour n'autoriser la mise à feu de la charge pyrotechnique qu'après un temps déterminé compté à partir de l'activation du piège, activation qui correspond à une manipulation spécifique du dispositif par l'opérateur lors de la mise en place du dispositif pyrotechnique.

Les dispositifs de sécurité des documents précités ne donnent cependant pas satisfaction. Il est en effet possible, pour un utilisateur du dispositif du document EP 1 109 446, d'omettre ou d'oublier la pièce mobile destinée à s'opposer mécaniquement à l'établissement du contact de mise à feu. Et il est difficile, pour un utilisateur du dispositif du document FR 2 897 510, d'estimer le temps qui lui est accordé pour se mettre à l'abri après activation.

En outre, aucun de ces dispositifs ne protège efficacement un utilisateur contre tout déclenchement intempestif de la charge pyrotechnique une fois le dispositif pyrotechnique installé. Il est en effet toujours possible qu'un enfant sans surveillance manipule le dispositif pyrotechnique après installation jusqu'à solliciter les moyens de détection qui provoquent alors la mise à feu accidentelle de la charge pyrotechnique.

Un autre inconvénient des dispositifs existants est qu'il est difficile de se rendre compte visuellement de façon immédiate de l'état du dispositif pyrotechnique : on ignore si celui-ci est activé, de telle sorte que sa charge pyrotechnique est prête à exploser, ou si celui-ci est désactivé, toute explosion de la charge pyrotechnique étant empêchée et le dispositif étant alors inefficace.

Un premier problème proposé par l'invention est de limiter le risque de déclenchement intempestif de la charge pyrotechnique du dispositif pyrotechnique, et ce tant lors de la mise en place du dispositif pyrotechnique qu'après sa mise en place, ainsi que lors de son retrait.

Selon un autre aspect, l'invention vise à permettre un diagnostic visuel rapide du dispositif pyrotechnique afin de déterminer sans ambiguïté son état d'activation ou de désactivation.

Pour atteindre ces buts ainsi que d'autres, l'invention selon la revendication 1 propose un dispositif pyrotechnique destiné à la destruction des animaux creusant des galeries tels qu'une taupe par la mise à feu d'une charge pyrotechnique, comportant des moyens de détection de l'animal et un circuit électrique de mise à feu comprenant un contacteur de mise à feu piloté par les moyens de détection ; selon l'invention, le dispositif pyrotechnique comporte :
- un premier boîtier destiné à être installé au sol, connecté électriquement à la charge pyrotechnique, et comportant les moyens de détection,
- un deuxième boîtier destiné à être installé au sol à distance du premier boîtier, relié au premier boîtier par l'intermédiaire de moyens de connexion filaires, et comportant des premiers moyens d'interruption du circuit électrique de mise à feu aptes à prendre un état d'interruption et un état de continuité qui respectivement interrompent ou établissent la continuité d'un premier tronçon de circuit électrique de mise à feu.

La mise en place d'un tel dispositif s'effectue en commençant par l'installation de la charge pyrotechnique, du premier boîtier et des moyens de détection. Lors de cette étape, les premiers moyens d'interruption sont dans l'état d'interruption et interrompent la continuité du premier tronçon de circuit électrique de mise à feu, de sorte qu'il n'y a pas de risque d'une mise à feu accidentelle de la charge pyrotechnique. L'utilisateur installe ensuite le deuxième boîtier en disposant celui-ci à distance du premier boîtier et de la charge pyrotechnique grâce aux moyens de connexion filaires. Après l'installation du deuxième boîtier, l'utilisateur sollicite les premiers moyens d'interruption pour établir la continuité du premier tronçon de circuit électrique de mise à feu. Lors de cette étape de manoeuvre des premiers moyens d'interruption pour l'établissement de la continuité du premier tronçon de circuit électrique de mise à feu, l'utilisateur est donc en sécurité puisque situé à distance du premier boîtier et de la charge pyrotechnique. Le dispositif pyrotechnique se trouve alors activé et prêt à fonctionner.

Lors du retrait du dispositif pyrotechnique, l'utilisateur doit commencer par solliciter les premiers moyens d'interruption, pour interrompre la continuité du premier tronçon de circuit électrique de mise à feu. A ce moment, l'utilisateur agit sur le deuxième boîtier et se trouve donc en sécurité, à distance du premier boîtier et de la charge pyrotechnique. Après cette opération, le dispositif pyrotechnique se trouve désactivé et ne peut plus fonctionner. Puis l'utilisateur retire le premier boîtier, les moyens de détection, et la charge pyrotechnique dont la mise à feu ne peut plus se produire.

L'utilisateur est ainsi efficacement protégé tant lors de l'installation du dispositif pyrotechnique que lors de son retrait.

Avantageusement, les moyens de connexion entre les premier et deuxième boîtiers peuvent être rigides. Une distance minimale de sécurité est ainsi conservée entre les premier et deuxième boîtiers. L'utilisation de moyens de connexion rigides empêche l'utilisateur de positionner le second boîtier à proximité du premier boîtier, et garantit ainsi que l'utilisateur restera éloigné du premier boîtier et de la charge pyrotechnique lors de l'activation et de la désactivation du dispositif pyrotechnique.

De préférence, les moyens de connexion peuvent s'étendre entre les premier et deuxième boîtiers selon une longueur d'au minimum un mètre environ. Une distance d'un mètre est généralement suffisante pour que la charge pyrotechnique ne risque pas de blesser l'utilisateur.

Avantageusement, le deuxième boîtier peut comprendre une source d'énergie électrique d'alimentation du circuit électrique de mise à feu, disposée de préférence de façon amovible dans un logement du deuxième boîtier. La source d'énergie électrique peut ainsi être installée tout à la fin de l'installation du dispositif pyrotechnique, et peut être retirée tout au début de la désinstallation, l'utilisateur se tenant alors à distance du premier boîtier et de la charge pyrotechnique.

De préférence, le premier boîtier peut comporter des deuxièmes moyens d'interruption du circuit électrique de mise à feu aptes à prendre sélectivement un état d'interruption et un état de continuité qui respectivement interrompent ou établissent la continuité d'un deuxième tronçon de circuit électrique de mise à feu. On dispose ainsi d'au moins une double sécurité par l'utilisation des premiers et deuxièmes moyens d'interruption.

Avantageusement, le dispositif pyrotechnique peut comporter :
- des moyens d'inhibition du circuit électrique de mise à feu, pilotés par des moyens de commande,
- des moyens de détection de l'état des premiers moyens d'interruption et des deuxièmes moyens d'interruption,
- lorsque les premiers moyens d'interruption basculent de l'état d'interruption à l'état de continuité alors que les deuxièmes moyens d'interruption sont à l'état d'interruption, les moyens de commande pilotent les moyens d'inhibition pour inhiber le circuit électrique de mise à feu jusqu'à ce que les premiers et deuxièmes moyens d'interruption soient à nouveau à l'état d'interruption.

L'utilisateur est ainsi contraint et forcé de respecter un ordre d'installation préalablement établi pour pouvoir activer le dispositif pyrotechnique. L'utilisateur devra ainsi impérativement avoir installé le premier boîtier, la charge pyrotechnique et les moyens de détection avant d'installer le deuxième boîtier. L'utilisateur se trouve donc en sécurité lors de l'établissement de la continuité du premier tronçon de circuit électrique de mise à feu, puisqu'il est nécessairement situé à distance du premier boîtier et de la charge pyrotechnique.

De préférence, on peut prévoir que :
- les deuxièmes moyens d'interruption comportent un premier capot amovible, qui peut être rapporté sur le premier boîtier et sur les moyens de détection dans une position de recouvrement, et qui peut être séparé du premier boîtier dans une position de retrait,
- en position de retrait du premier capot, la continuité du deuxième tronçon de circuit électrique de mise à feu est interrompue,
- en position de recouvrement du premier capot, la continuité du deuxième tronçon de circuit électrique de mise à feu est établie.

La mise en place du dispositif pyrotechnique s'effectue en l'absence du premier capot amovible. La continuité du deuxième tronçon de circuit électrique de mise à feu est alors interrompue et il n'y a alors aucun risque d'explosion accidentelle de la charge pyrotechnique.

L'état du dispositif pyrotechnique peut être aisément perçu visuellement : si le premier capot est en position de retrait, alors le dispositif pyrotechnique est désactivé.

Lorsque le dispositif pyrotechnique est activé, le premier capot amovible est en position de recouvrement et recouvre simultanément le premier boîtier et les moyens de détection. Le premier capot amovible limite ainsi l'accès aux moyens de détection et au premier boîtier, ce qui permet de sécuriser les personnes une fois le dispositif pyrotechnique mis en place.

Par exemple, un enfant désirant manipuler le dispositif pyrotechnique une fois celui-ci mis en place devra retirer le premier capot amovible avant de pouvoir accéder aux moyens de détection et/ou au premier boîtier. L'enfant ne pourra ainsi librement manipuler le premier boîtier et/ou les moyens de détection qu'une fois le premier capot amovible retiré, ce qui aura préalablement désactivé le dispositif pyrotechnique.

De préférence, on peut prévoir que :
- les premiers moyens d'interruption comportent un deuxième capot amovible, qui peut être rapporté sur le deuxième boîtier dans une position de recouvrement, et qui peut être séparé du deuxième boîtier dans une position de retrait,
- en position de retrait du deuxième capot, la continuité du premier tronçon de circuit électrique de mise à feu est interrompue,
- en position de recouvrement du deuxième capot, la continuité du premier tronçon de circuit électrique de mise à feu est établie.

La mise en place du dispositif pyrotechnique s'effectue en l'absence du deuxième capot amovible. La continuité du premier tronçon de circuit électrique de mise à feu est alors interrompue et il n'y a alors aucun risque d'explosion accidentelle de la charge pyrotechnique.

L'état du dispositif pyrotechnique peut être aisément perçu visuellement : si le deuxième capot est en position de retrait, alors le dispositif pyrotechnique est désactivé.

Lorsque le dispositif pyrotechnique comporte simultanément un premier capot et un deuxième capot, l'état du dispositif pyrotechnique peut être aisément perçu visuellement : si l'un ou l'autre des premier et deuxième capots est en position de retrait, alors le dispositif pyrotechnique est désactivé.

Dans un premier mode de réalisation, on peut prévoir que :
- les premiers ou deuxièmes moyens d'interruption du circuit électrique de mise à feu comportent un commutateur, connecté en série dans le circuit électrique de mise à feu, et rappelé en permanence en position ouverte par des moyens de rappel élastiques,
- le premier ou deuxième capot comporte des moyens d'appui qui, lorsqu'on déplace ledit premier, respectivement deuxième, capot en position de recouvrement, repoussent le commutateur en position fermée à l'encontre des moyens de rappel élastiques.

Dans un second mode de réalisation, on peut prévoir que :
- le circuit électrique de mise à feu comprend un tronçon mobile de circuit solidaire du premier ou deuxième capot et une partie fixe de circuit solidaire du premier ou deuxième boîtier, ladite partie fixe de circuit comportant une interruption,
- lorsque le premier ou deuxième capot est en position de recouvrement, le tronçon mobile de circuit est en contact avec la partie fixe de circuit pour établir la continuité du circuit électrique de mise à feu dans la zone de l'interruption.

Avantageusement, on peut prévoir que :
- le premier ou deuxième boîtier comporte une face inférieure de posage adaptée pour reposer sur le sol,
- le premier boîtier et le premier capot, ou le deuxième boîtier et le deuxième capot, sont conformés et dimensionnés de telle sorte que, lorsque le premier ou deuxième boîtier repose sur le sol et que le premier ou deuxième capot est en position de recouvrement, le premier ou deuxième capot s'oppose à ce qu'un utilisateur puisse saisir manuellement le premier boîtier et les moyens de détection ou le deuxième boîtier.

Il y a ainsi peu de risques qu'une fois mis en place sur le sol le dispositif pyrotechnique se déclenche accidentellement et blesse une personne.

De préférence, on peut prévoir que le premier ou deuxième capot comporte une paroi supérieure de dimensions telles que ladite paroi supérieure déborde tout autour du premier boîtier et des moyens de détection ou du deuxième boîtier selon un dépassement périphérique.

Le dépassement périphérique permet d'empêcher efficacement un utilisateur d'accéder aux boîtiers et/ou, le cas échéant, aux moyens de détection, ce qui évite ainsi une mise à feu accidentelle de la charge pyrotechnique.

Avantageusement, on peut prévoir que :
- le premier ou deuxième boîtier comporte une face inférieure de posage adaptée pour reposer sur le sol,
- le premier ou deuxième capot comporte une paroi périphérique latérale s'étendant à l'écart de la paroi supérieure jusqu'à un bord périphérique inférieur,
- la paroi périphérique latérale du premier ou deuxième capot s'étend selon une hauteur telle que, lorsque le premier ou deuxième boîtier repose sur le sol et que le premier ou deuxième capot est rapporté respectivement sur le premier ou deuxième boîtier, le bord périphérique inférieur est situé au voisinage du niveau de la face inférieure de posage.

L'utilisateur peut ainsi difficilement passer ses mains par-dessous le capot amovible pour accéder aux boîtiers et/ou, le cas échéant, aux moyens de détection. Il lui sera ainsi très difficile de parvenir à déclencher une mise à feu sans avoir au préalable retiré l'un des capots amovibles et ainsi désactivé le dispositif pyrotechnique.

De préférence, on peut prévoir que :
- les moyens de connexion comportent des moyens de conduction électrique souples,
- les moyens de connexion pénètrent dans le premier et/ou deuxième boîtier par une entrée qui est située à une hauteur par rapport à la face inférieure de posage qui est supérieure à la hauteur qui sépare le bord périphérique inférieur du premier ou deuxième capot du niveau de la face inférieure de posage.

Ainsi, si une personne telle qu'un enfant vient à saisir les moyens de conduction du dispositif pyrotechnique, la traction exercée sur les moyens de conduction soulève l'un ou plusieurs des capots. Le dispositif pyrotechnique est alors automatiquement désactivé.

Avantageusement, les moyens de détection peuvent comporter un palpeur destiné à être inséré en tout ou partie dans la galerie de l'animal.

Un palpeur est un moyen simple, fiable et efficace pour détecter un animal tel qu'une taupe.

De préférence, ledit palpeur peut comprendre une pluralité de tronçons séparables de tige.

La longueur du palpeur peut ainsi être aisément modifiée et adaptée en fonction de la profondeur de la galerie creusée par les animaux, et reste compatible avec la présence du premier capot amovible lorsque celui-ci est en position de recouvrement.

En alternative, on peut prévoir que ledit palpeur comprend une tige télescopique.

Avantageusement, on peut prévoir que :
- le premier ou deuxième boîtier comporte une face inférieure de posage adaptée pour reposer sur le sol,
- le premier ou deuxième boîtier comporte des moyens d'ancrage dans le sol s'étendant depuis la face inférieure de posage.

Les moyens d'ancrage permettent d'éviter tout mouvement des boîtiers une fois le dispositif pyrotechnique installé sur le sol. On limite ainsi le risque de mouvements intempestifs des boîtiers et/ou des moyens de détection, mouvements susceptibles d'entraîner une mise à feu accidentelle de la charge pyrotechnique.

D'autres objets, caractéristiques et avantages de la présente invention ressortiront de la description suivante de modes de réalisation particuliers, faite en relation avec les figures jointes, parmi lesquelles :
- la figure 1 est une vue de côté d'un dispositif pyrotechnique selon un premier mode de réalisation de l'invention, avec des premier et deuxième capots amovibles en position de recouvrement ;
- la figure 2 est une vue en perspective du dispositif pyrotechnique de la figure 1 avec les premier et deuxième capots amovibles en position de retrait ;
- la figure 3 est une vue de face et en coupe du premier boîtier du dispositif pyrotechnique de la figure 1 ;
- la figure 4 est une vue de face et en coupe du premier boîtier du dispositif pyrotechnique de la figure 2 ;
- la figure 5 est une vue de face et en coupe du deuxième boîtier du dispositif pyrotechnique de la figure 1 ;
- la figure 6 est une vue de face et en coupe du deuxième boîtier du dispositif pyrotechnique de la figure 2 ;
- la figure 7 est une vue de dessous du dispositif pyrotechnique de la figure 1 ;
- la figure 8 est une vue de dessus du dispositif pyrotechnique de la figure 1 ;
- la figure 9 est une vue schématique de côté et en coupe du dispositif pyrotechnique de la figure 2 selon le premier mode de réalisation de l'invention ;
- la figure 10 est une vue schématique de côté et en coupe du dispositif pyrotechnique de la figure 1 selon le premier mode de réalisation de l'invention ;
- la figure 11 est une vue schématique de côté et en coupe du premier boîtier du dispositif pyrotechnique de la figure 1 selon un second mode de réalisation de l'invention, avec le premier capot amovible en position de retrait ; et
- la figure 12 est une vue en perspective d'un palpeur en cours d'assemblage.

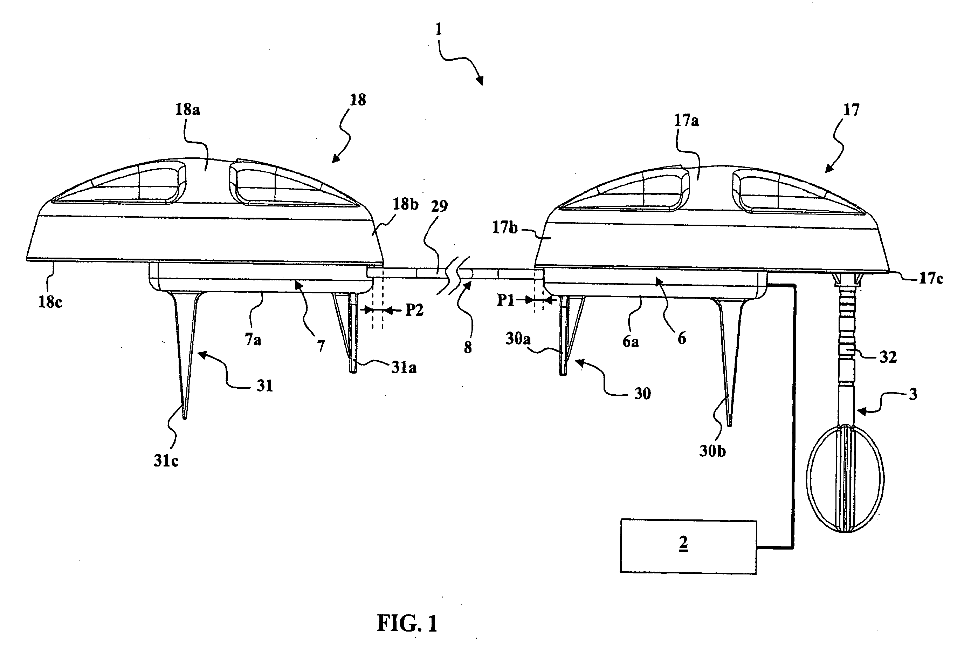

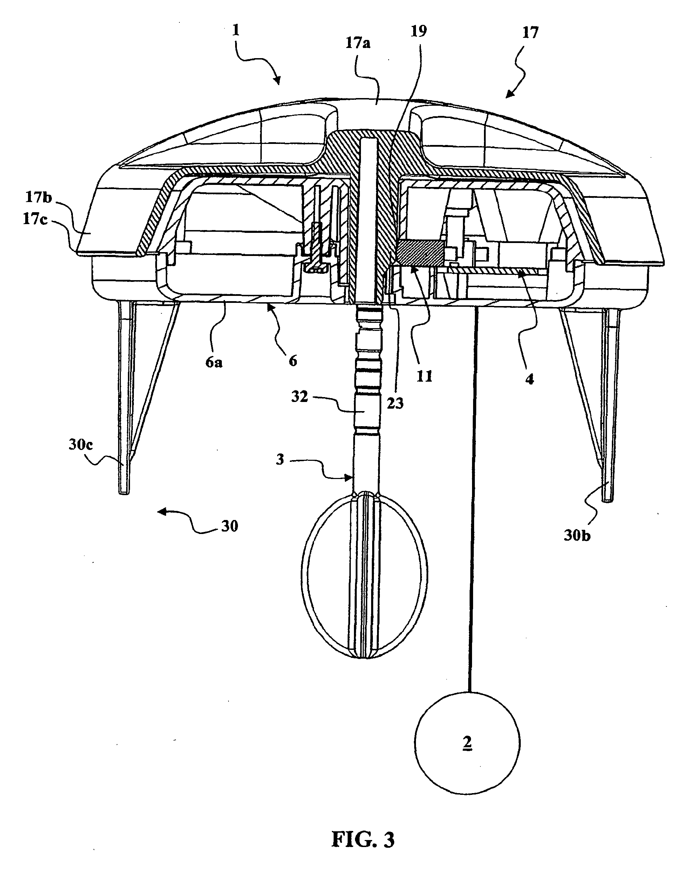

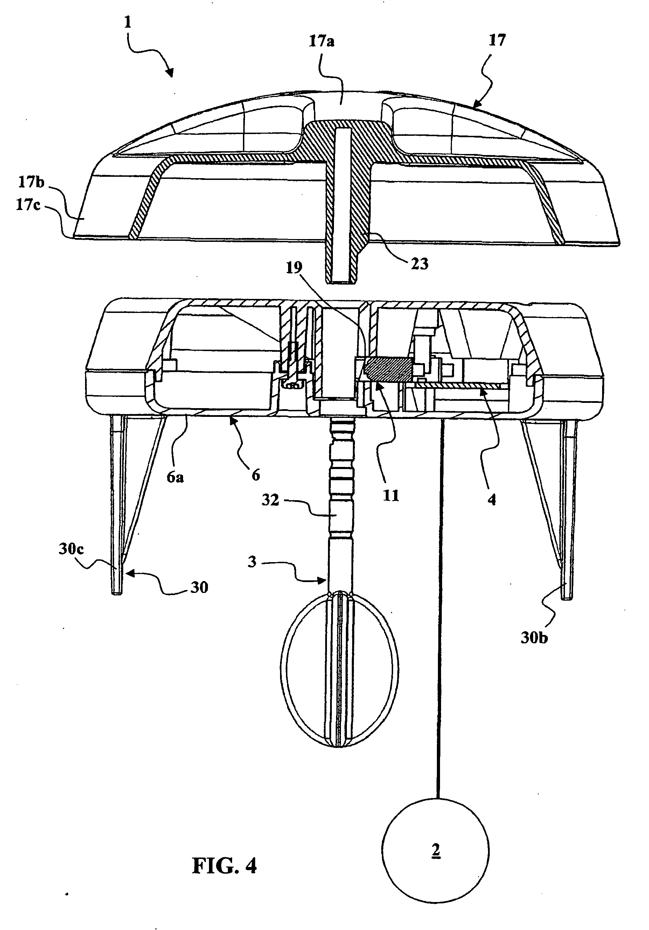

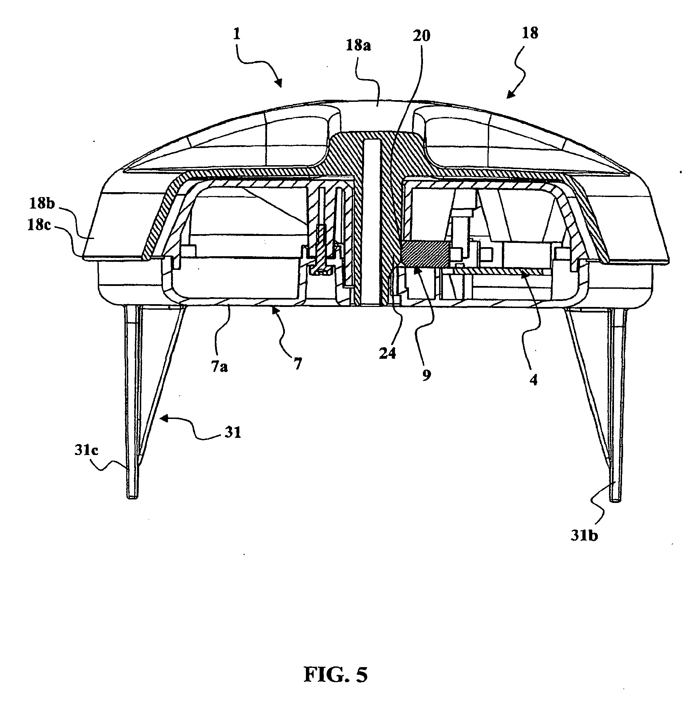

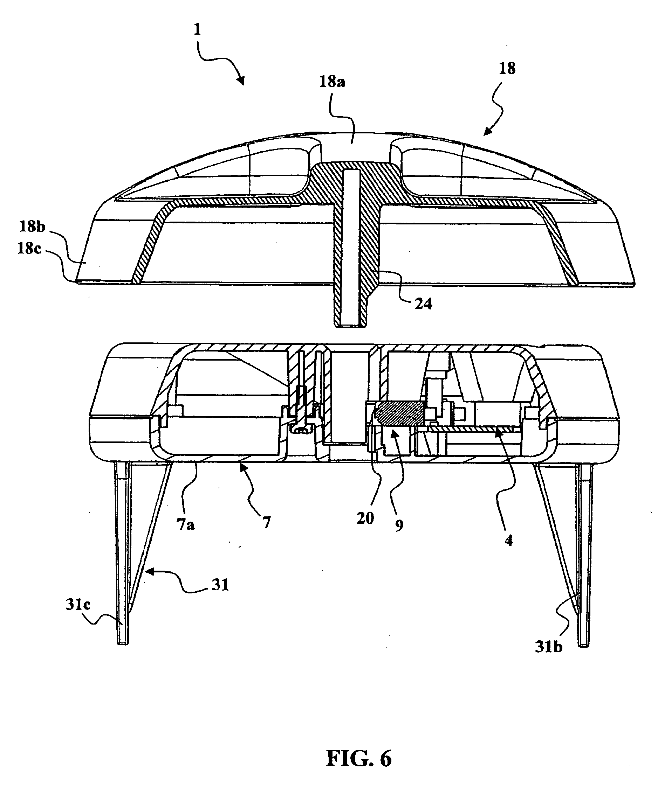

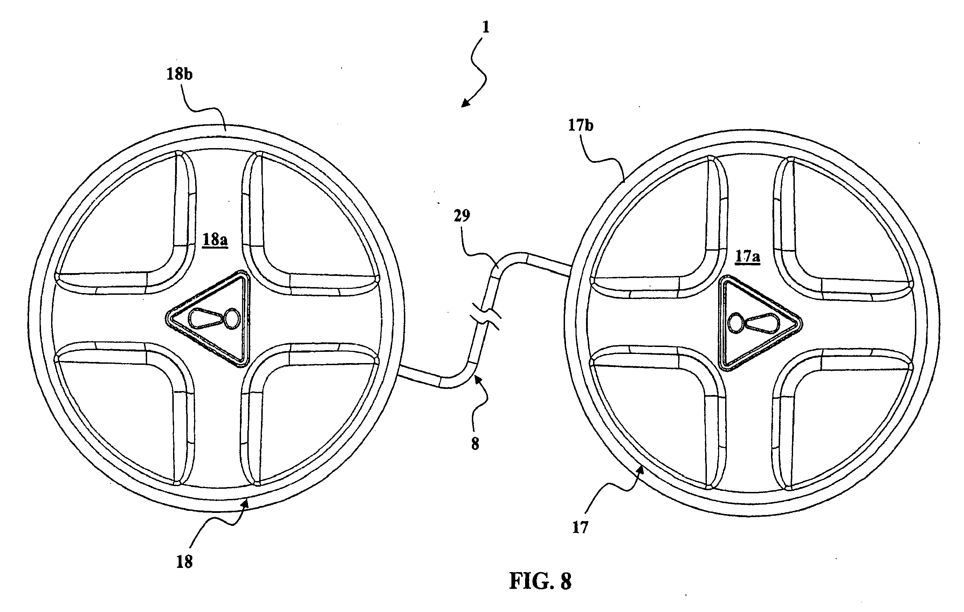

Les figures 1 à 12 illustrent deux modes de réalisation d'un dispositif pyrotechnique selon l'invention.

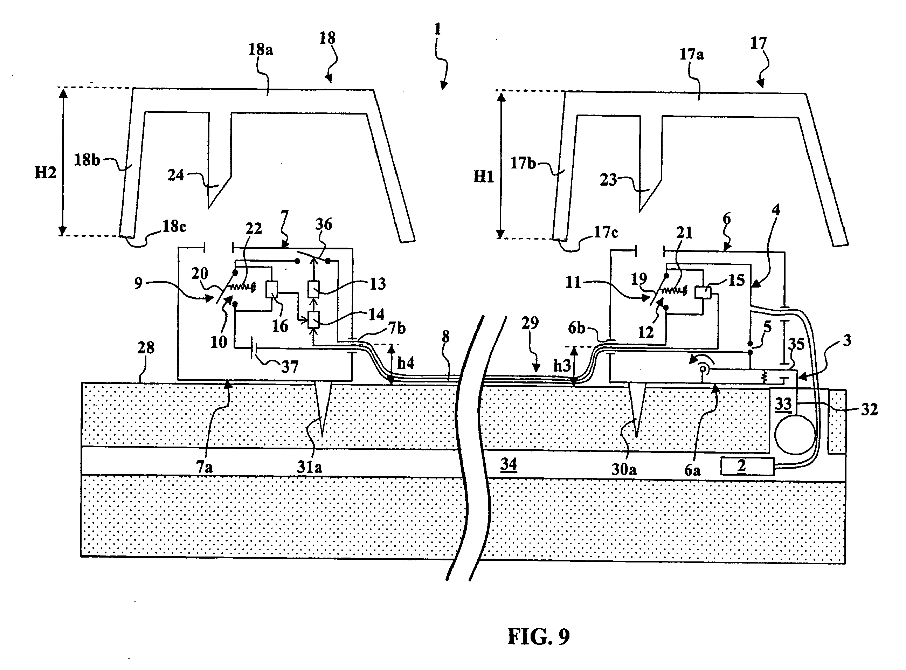

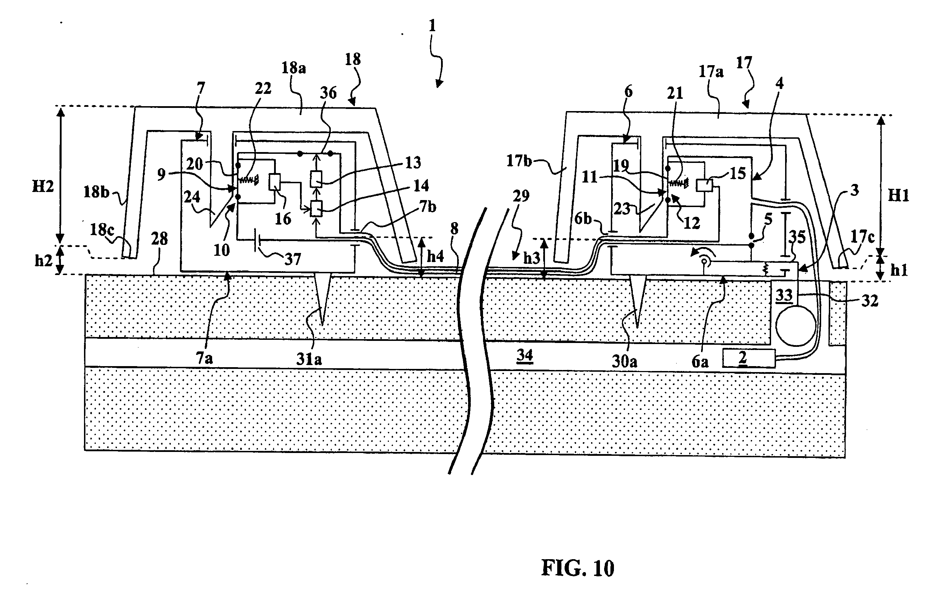

Sur la figure 1, on distingue un dispositif pyrotechnique 1 destiné à la destruction des animaux creusant des galeries tels qu'une taupe par la mise à feu d'une charge pyrotechnique 2. Le dispositif pyrotechnique 1 comporte des moyens de détection 3 de l'animal et un circuit électrique de mise à feu 4 comprenant un contacteur de mise à feu 5 piloté par les moyens de détection 3 (figures 9 et 10).

On voit plus particulièrement sur les figures 9 et 10 que le dispositif pyrotechnique 1 comporte :
- un premier boîtier 6 destiné à être installé au sol, connecté électriquement à la charge pyrotechnique 2, et comportant les moyens de détection 3,
- un deuxième boîtier 7 destiné à être installé au sol, relié au premier boîtier 6 par l'intermédiaire de moyens de connexion 8 filaires, et comportant des premiers moyens d'interruption 9 (figures 9 et 10) du circuit électrique de mise à feu 4 permettant sélectivement d'interrompre (figure 9) ou d'établir (figure 10) la continuité d'un premier tronçon 10 de circuit électrique de mise à feu 4.

Dans une première variante de l'invention, les moyens de connexion 8 entre les premier et deuxième boîtiers 6 et 7 sont rigides, de préférence d'au moins un mètre environ de longueur, ce qui garantit que le deuxième boîtier 7 est toujours éloigné de la charge pyrotechnique 2 d'une distance suffisante pour que l'utilisateur ne risque pas d'être blessé en cas de mise à feu accidentelle de la charge pyrotechnique 2.

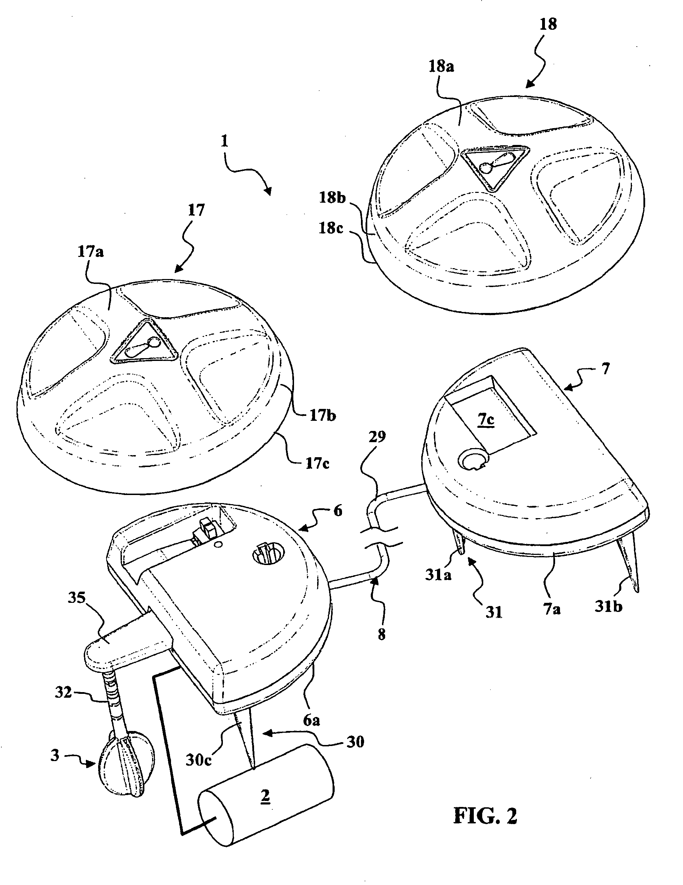

On voit plus particulièrement sur la figure 2 que le deuxième boîtier 7 comprend un logement 7c destiné à recevoir de façon amovible une source d'énergie électrique d'alimentation du circuit électrique de mise à feu 4. La source d'énergie électrique d'alimentation peut par exemple prendre la forme d'accumulateurs, rechargeables ou non.

On voit plus particulièrement sur les figures 9 et 10 que le premier boîtier 6 comporte des deuxièmes moyens d'interruption 11 du circuit électrique de mise à feu 4, permettant sélectivement d'interrompre (figure 9) ou d'établir (figure 10) la continuité d'un deuxième tronçon 12 de circuit électrique de mise à feu 4.

Afin d'obliger l'utilisateur à respecter une séquence précise d'installation assurant une protection encore plus efficace de l'utilisateur, le dispositif pyrotechnique 1 comporte :
- des moyens d'inhibition 13 du circuit électrique de mise à feu 4, pilotés par des moyens de commande 14,
- des moyens de détection 15 et 16 de l'état des premiers moyens d'interruption 9 et des deuxièmes moyens d'interruption 11.

On prévoit que, lorsque les premiers moyens d'interruption 9 établissent la continuité du premier tronçon 10 avant que les deuxièmes moyens d'interruption 11 n'aient établi la continuité du deuxième tronçon 12, les moyens de commande 14 pilotent les moyens d'inhibition 13 pour inhiber le circuit de mise à feu 4.

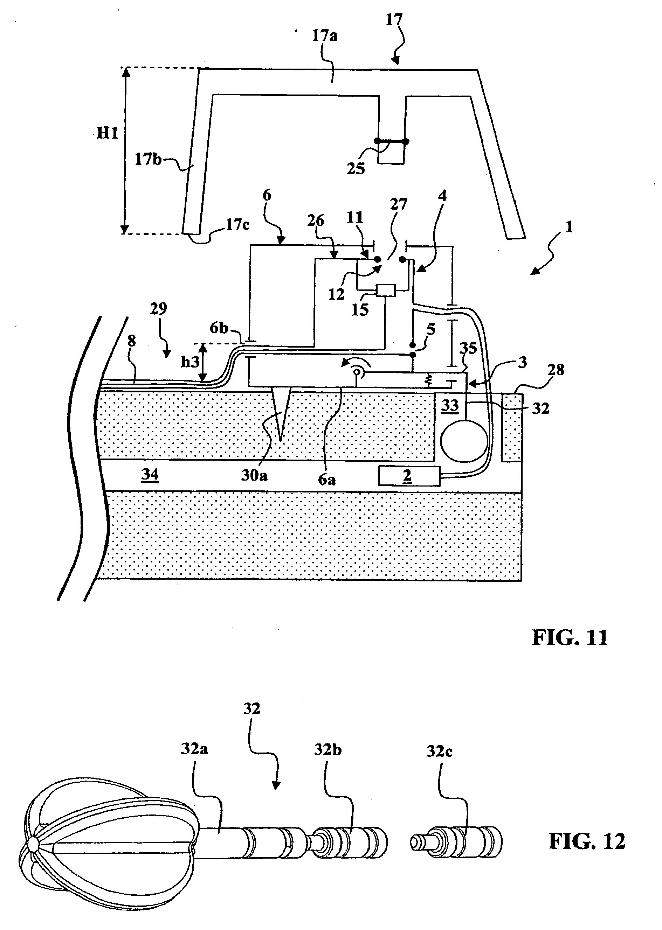

Sur les figures 1 à 11, on voit que :
- les deuxièmes moyens d'interruption 11 comportent un premier capot 17 amovible, qui peut être rapporté sur le premier boîtier 6 et sur les moyens de détection 3 dans une position de recouvrement (figures 1, 3, 7, 8 et 10), et qui peut être séparé du premier boîtier 6 dans une position de retrait (figures 2, 4, 9 et 11),
- en position de retrait du premier capot 17, la continuité du deuxième tronçon 12 de circuit électrique de mise à feu 4 est interrompue (figures 9 et 11),
- en position de recouvrement du premier capot 17, la continuité du deuxième tronçon 12 de circuit électrique de mise à feu 4 est établie (figure 10).

On constate également que :
- les premiers moyens d'interruption 9 comportent un deuxième capot 18 amovible, qui peut être rapporté sur le deuxième boîtier 7 dans une position de recouvrement (figures 1, 5, 7, 8 et 10), et qui peut être séparé du deuxième boîtier 7 dans une position de retrait (figures 2, 6 et 9),
- en position de retrait du deuxième capot 18, la continuité du premier tronçon 10 de circuit électrique de mise à feu 4 est interrompue (figure 9),
- en position de recouvrement du deuxième capot 18, la continuité du premier tronçon 10 de circuit électrique de mise à feu 4 est établie (figure 10).

Dans un premier mode de réalisation de l'invention, plus particulièrement illustré schématiquement sur les figures 9 et 10, on prévoit que :
- les premiers ou deuxièmes moyens d'interruption 9 et 11 du circuit électrique de mise à feu 4 comportent un commutateur 20 ou 19 déplaçable ou déformable, connecté en série dans le circuit électrique de mise à feu 4, et rappelé en permanence en position ouverte par des moyens de rappel élastiques 22 ou 21,
- le premier ou deuxième capot 17 et 18 comporte des moyens d'appui 23 et 24 qui, lorsqu'on déplace ledit premier capot, respectivement deuxième capot 18, en position de recouvrement, repoussent le commutateur 19 ou 20 en position fermée à l'encontre des moyens de rappel élastiques 21 ou 22.

Un second mode de réalisation de l'invention est partiellement représenté sur la figure 11 : seul un premier boîtier 6 est représenté. Ce deuxième mode de réalisation diffère du premier mode de réalisation par la structure des deuxièmes moyens d'interruption 11.

On voit plus particulièrement sur la figure 11 que :
- le circuit électrique de mise à feu 4 comprend un tronçon mobile de circuit 25 solidaire du premier capot 17, et comprend une partie fixe de circuit 26 solidaire du premier boîtier 6, ladite partie fixe de circuit 26 comportant une interruption 27,
- lorsque le premier capot 17 est en position de recouvrement (non représenté sur les figures), le tronçon mobile de circuit 25 est en contact avec la partie fixe de circuit 26 pour établir la continuité de circuit électrique de mise à feu 4 dans la zone de l'interruption 27.

Les premiers moyens d'interruption 9 peuvent également comprendre une structure similaire à celle des deuxièmes moyens d'interruption 11 illustrés sur la figure 11.

Et il est également envisageable que l'un ou l'autre des moyens d'interruption 9 ou 11 présente une structure similaire à celle illustrée sur la figure 11, tandis que l'autre des moyens d'interruption 9 ou 11 présente une structure semblable à celle illustrée sur les figures 9 et 10.

Sur les figures 1 à 11, on voit que :
- le premier boîtier 6 comporte une face inférieure de posage 6a adaptée pour reposer sur le sol 28,
- le premier boîtier 6 et le premier capot 17 sont conformés et dimensionnés de telle sorte que, lorsque le premier boîtier 6 repose sur le sol 28 et que le premier capot 17 est en position de recouvrement (figures 1, 3, 7, 8 et 10), le premier capot 17 s'oppose à ce qu'un utilisateur puisse saisir manuellement le premier boîtier 6 et les moyens de détection 3.

On limite ainsi efficacement le risque qu'un utilisateur parvienne à saisir le premier boîtier 6 et/ou les moyens de détection 3 et déclenche ainsi une mise à feu de la charge pyrotechnique 2 susceptible de le blesser. En effet, l'utilisateur est contraint de retirer le premier capot 17 afin de parvenir à saisir le premier boîtier 6 et/ou les moyens de détection 3, ce qui interrompt le circuit électrique de mise à feu 4 grâce aux deuxièmes moyens d'interruption 11.

De la même façon, on prévoit que :
- le deuxième boîtier 7 comporte une face inférieure de posage 7a adaptée pour reposer sur le sol 28,
- le deuxième boîtier 7 et le deuxième capot 18 sont conformés et dimensionnés de telle sorte que, lorsque le deuxième boîtier 7 repose sur le sol 28 et que le deuxième capot 18 est en position de recouvrement (figures 1, 5, 7, 8 et 10), le deuxième capot 18 s'oppose à ce qu'un utilisateur puisse saisir manuellement le deuxième boîtier 7.

L'utilisateur qui commencerait à démonter le dispositif pyrotechnique 1 après que celui-ci ait été installé ne pourra donc saisir le deuxième boîtier 7 qu'après avoir retiré préalablement le deuxième capot 18, ce qui aura eu pour effet de désactiver le dispositif pyrotechnique 1 par l'interruption du circuit électrique de mise à feu 4 au moyen des premiers moyens d'interruption 9.

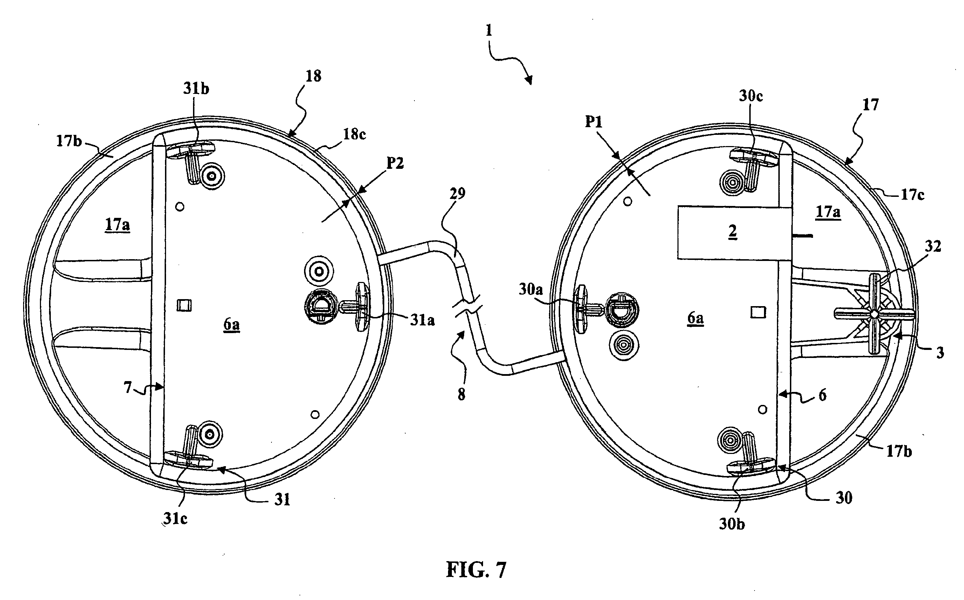

En pratique, on prévoit que le premier capot 17 comporte une paroi supérieure 17a de dimensions telles que ladite paroi supérieure 17a déborde tout autour du premier boîtier 6 et des moyens de détection 3 selon un dépassement périphérique P1 (figures 1 et 7).

De même, le deuxième capot 18 comporte une paroi supérieure 18a de dimensions telles que ladite paroi supérieure 18a déborde tout autour du deuxième boîtier 7 selon un dépassement périphérique P2 (figures 1 et 7).

Afin de garantir un fonctionnement encore plus efficace du premier capot 17, on prévoit que :
- le premier boîtier 6 comporte une face inférieure de posage 6a adaptée pour reposer sur le sol 28,
- le premier capot 17 comporte une paroi périphérique latérale 17b s'étendant à l'écart de la paroi supérieure 17a jusqu'à un bord périphérique inférieur 17c,
- la paroi périphérique latérale 17b du premier capot 17 s'étend selon une hauteur H1 telle que, lorsque le premier boîtier 6 repose sur le sol 28 et que le premier capot 17 est rapporté en position de recouvrement sur le premier boîtier 6, le bord périphérique inférieur 17c est situé au voisinage du niveau de la face inférieure de posage 6a.

Ceci limite plus efficacement l'accès au premier boîtier 6 et aux moyens de détection 3 lorsque le dispositif pyrotechnique 1 est mis en place sur le sol 28 et activé. En pratique, on pourra prévoir que le bord périphérique inférieur 17c se situe à une hauteur h1 réduite de la face inférieure de posage 6a, cette hauteur h1 étant d'au maximum environ un centimètre, afin d'empêcher le passage de doigts entre le bord périphérique inférieur 17c et le sol 28.

Il en est de même pour le deuxième boîtier 7 dont le deuxième capot 18 comporte une paroi périphérique latérale 18b s'étendant à l'écart de la paroi supérieure 18a jusqu'à un bord périphérique inférieur 18c. La paroi périphérique latérale 18b du deuxième capot 18 s'étend selon une hauteur H2 telle que, lorsque le deuxième boîtier 7 repose sur le sol 28 et que le deuxième capot 18 rapporté en position de recouvrement sur le deuxième boîtier 7, le bord périphérique inférieur 18c est situé au voisinage du niveau de la face inférieure de posage 7a. La hauteur h2 entre le bord périphérique inférieur 18c et la face inférieure de posage 7a n'excède également pas environ un centimètre.

Afin de limiter l'encombrement du dispositif pyrotechnique 1 tant lors de sa vente que lors de son stockage, les moyens de connexion 8 peuvent comporter des moyens de conduction électrique souple 29 (figures 9 et 10). Dans ce cas, il est avantageux que les moyens de connexion 8 pénètrent dans le premier boîtier 6 et/ou dans le deuxième boîtier 7 par des entrées 6b et 7b qui sont situées à des hauteurs h3 et h4 qui sont respectivement supérieures aux hauteurs h1 et h2 qui séparent les bords périphériques inférieurs 17c et 18c du niveau des faces inférieures de posage 6a et 7a.

Les hauteurs h1 à h4 sont prévues de telle sorte que, lorsque les moyens de conduction électrique souple 29 sont tirés par un utilisateur, les bords périphériques inférieurs 17c et 18c sont également soulevés à des hauteurs h3 ou h4 qui sont suffisantes pour que les moyens d'interruption 9 et 11 interrompent la continuité du circuit électrique de mise à feu 4.

On voit plus particulièrement sur les figures 1 et 7 que le premier boîtier 6 comporte des moyens d'ancrage 30 dans le sol 28 (figures 9 à 11), s'étendant depuis la face inférieure de posage 6a. En l'espèce, les moyens d'ancrage 30 comportent trois pointes 30a à 30c qui permettent d'ancrer de façon stable le premier boîtier 6 dans le sol 28.

De la même façon, le deuxième boîtier 7 comporte des moyens d'ancrage 31 avec trois pointes 31 a à 31 c qui permettent d'ancrer de façon stable le deuxième boîtier 7 dans le sol 28 (figures 9 à 11). Les moyens d'ancrage 30 et 31 empêchent un utilisateur d'induire un mouvement au premier boîtier 6 et aux moyens de détection 3 ou au deuxième boîtier 7, mouvement qui pourrait déclencher une mise à feu accidentelle de la charge pyrotechnique 2.

Dans le dispositif pyrotechnique 1 illustré sur les figures 1 à 4, 7 et 9 à 12, les moyens de détection 3 comportent un palpeur 32 destiné à être inséré en tout ou partie dans la galerie de l'animal. La galerie de l'animal pouvant être située à des profondeurs variables, le palpeur 32 comprend une pluralité de tronçons 32a à 32c de tige (figure 12), dont certains (32b, 32c) sont séparables. Selon la profondeur de la galerie de l'animal, l'utilisateur pourra choisir d'ajouter au tronçon d'extrémité 32a un ou plusieurs des tronçons séparables 32b et 32c.

Dans une alternative, non représentée sur les figures, le palpeur 32 peut comprendre une tige télescopique à tronçons coulissants, le caractère télescopique de la tige permettant d'ajuster en continu et au mieux la longueur du palpeur 32 à la profondeur de la galerie de l'animal.

L'utilisation du dispositif pyrotechnique 1 selon l'invention est expliquée ci-après au moyen des figures 9 et 10.

L'utilisateur commence par déboucher le conduit vertical 33 de la taupinière jusqu'à atteindre la galerie 34. La charge pyrotechnique 2 est installée dans la galerie 34. Puis le palpeur 32 est assemblé afin que celui-ci présente une hauteur satisfaisante.

Le palpeur 32 est alors fixé selon son extrémité supérieure à un levier 35, plus particulièrement visible sur la figure 2, lequel levier 35 est déplaçable pour fermer le contacteur de mise à feu 5.

L'utilisateur rapporte ensuite le premier boîtier 6 muni du palpeur 32 sur la taupinière en engageant le palpeur 32 dans le conduit vertical 33 de la taupinière. Le premier boîtier 6 est jusque là dépourvu de son premier capot 17 amovible, ce qui assure une interruption du deuxième tronçon 12 de circuit électrique de mise à feu 4. De même, le deuxième boîtier 7 est jusque là dépourvu de son deuxième capot 18 amovible, ce qui assure une interruption de la continuité du premier tronçon 10 de circuit électrique de mise à feu 4. L'utilisateur ne risque ainsi pas de déclencher accidentellement la mise à feu de la charge pyrotechnique 2.

Lors de la mise en place du premier boîtier 6, l'utilisateur ancre celui-ci dans le sol 28 grâce aux pointes 30a à 30c.

L'utilisateur rapporte ensuite le premier capot 17 amovible en position de recouvrement, ce qui a pour effet d'établir la continuité du deuxième tronçon 12 de circuit électrique de mise à feu 4. Le dispositif pyrotechnique 1 n'est cependant pas encore activé.

L'utilisateur se déplace ensuite à l'écart du premier boîtier 6 et de la charge pyrotechnique 2 afin d'installer le deuxième boîtier 7, qu'il ancre dans le sol 28 grâce aux pointes 31 a à 31 c.

L'utilisateur rapporte alors le deuxième capot 18 amovible en position de recouvrement, ce qui a pour effet d'établir la continuité du premier tronçon 10 de circuit électrique de mise à feu 4.

Au cours de l'installation décrite ci-dessus, les moyens de détection 15 de l'état des deuxièmes moyens d'interruption 11 signalent aux moyens de commande 14 l'établissement de la continuité du deuxième tronçon 12 et les moyens de détection 16 de l'état des premiers moyens d'interruption 9 signalent aux moyens de commande 14 l'établissement de la continuité du premier tronçon 10.

Les moyens de commande 14 repèrent que chronologiquement la continuité du premier tronçon 10 a été établie après l'établissement de la continuité du deuxième tronçon 12. Les moyens de commande 14 pilotent alors les moyens d'inhibition 13 pour fermer un commutateur 36. Le circuit électrique de mise à feu 4 se trouve alors dans la configuration illustrée sur la figure 10, c'est-à-dire que la charge pyrotechnique 2 est prête à exploser en cas de sollicitation des moyens de détection 3 par un animal.

Si au contraire les moyens de commande 14 détectent un établissement de la continuité du premier tronçon 10 avant l'établissement de la continuité du deuxième tronçon 12, alors les moyens d'inhibition 13 sont pilotés de façon à inhiber le circuit de mise à feu 4 en ouvrant le commutateur 36 (figure 9). En effet, une telle séquence d'établissement des continuités des premier et deuxième tronçons 10 et 12 tend à signifier que l'utilisateur se trouve à proximité immédiate de la charge pyrotechnique 2, qu'il faut donc empêcher d'exploser.

Après que le dispositif pyrotechnique 1 ait été installé, les premier et deuxième capots 17 et 18 limitent tout accès d'un utilisateur ou d'un enfant respectivement aux moyens de détection 3 et au premier boîtier 6 ou au second boîtier 7, ce qui évite une mise à feu accidentelle de la charge pyrotechnique 2. En effet, pour manipuler le dispositif pyrotechnique 1 et/ou le retirer, l'utilisateur ou l'enfant est contraint de retirer préalablement l'un ou l'autre des premier ou second capot 17 ou 18 amovible, ce qui a pour effet d'interrompre la continuité du circuit électrique de mise à feu 4. Le dispositif pyrotechnique 1 est alors désactivé et la charge pyrotechnique 2 ne peut plus être mise à feu.

La sécurité des utilisateurs et des enfants est ainsi assurée lors de l'installation, de l'utilisation et du retrait du dispositif pyrotechnique 1.

Lorsque le dispositif pyrotechnique 1 est activé et qu'un animal déplace le palpeur 32 (par exemple lorsqu'une taupe tente de reboucher le conduit vertical 33), le mouvement est transmis au levier 35 qui se déplace pour fermer le contacteur de mise à feu 5. L'énergie électrique de la source d'énergie électrique 37 met alors à feu la charge pyrotechnique 2, qui explose et tue l'animal.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pyrotechnique (1) destiné à la destruction des animaux creusant des galeries tels qu'une taupe par la mise à feu d'une charge pyrotechnique (2), comportant des moyens de détection (3) de l'animal et un circuit électrique de mise à feu (4) comprenant un contacteur de mise à feu (5) piloté par les moyens de détection (3),
- un premier boîtier (6) destiné à être installé au sol (28), connecté électriquement à la charge pyrotechnique (2) et comportant les moyens de détection (3),
**caractérisé en ce que** le dispositif pyrotechnique (1) comporte :
- un deuxième boîtier (7) destiné à être installé au sol (28) à distance du premier boîtier (6), relié au premier boîtier (6) par l'intermédiaire de moyens de connexion (8) filaires, et comportant des premiers moyens d'interruption (9) du circuit électrique de mise à feu (4) aptes à prendre un état d'interruption et un état de continuité qui respectivement interrompent ou établissent la continuité d'un premier tronçon (10) de circuit électrique de mise à feu (4).

2. Dispositif pyrotechnique (1) selon la revendication 1, **caractérisé en ce que** les moyens de connexion (8) entre les premier (6) et deuxième (7) boîtiers sont rigides.

3. Dispositif pyrotechnique (1) selon l'une des revendications 1 ou 2, **caractérisé en ce que** les moyens de connexion (8) s'étendent entre les premier (6) et deuxième (7) boîtiers selon une longueur d'au minimum un mètre environ.

4. Dispositif pyrotechnique (1) selon l'une quelconque des revendications 1 à 3, **caractérisé en ce que** le deuxième boîtier (7) comprend une source d'énergie électrique (37) d'alimentation du circuit électrique de mise à feu (4), de préférence disposée de façon amovible dans un logement (7c) du deuxième boîtier (7).

5. Dispositif pyrotechnique (1) selon l'une quelconque des revendications 1 à 4, **caractérisé en ce que** le premier boîtier (6) comporte des deuxièmes moyens d'interruption (11) du circuit électrique de mise à feu (4) aptes à prendre sélectivement un état d'interruption et un état de continuité qui respectivement interrompent ou établissent la continuité d'un deuxième tronçon (12) de circuit électrique de mise à feu (4).

6. Dispositif pyrotechnique (1) selon la revendication 5, **caractérisé en ce que** :
- il comporte des moyens d'inhibition (13) du circuit électrique de mise à feu (4), pilotés par des moyens de commande (14),
- il comporte des moyens de détection (15, 16) de l'état des premiers moyens d'interruption (9) et des deuxièmes moyens d'interruption (11),
- lorsque les premiers moyens d'interruption (9) basculent de l'état d'interruption à l'état de continuité alors que les deuxièmes moyens d'interruption (11) sont à l'état d'interruption, les moyens de commande (14) pilotent les moyens d'inhibition (13) pour inhiber le circuit électrique de mise à feu (4) jusqu'à ce que les premiers (9) et deuxièmes (11) moyens d'interruption soient à nouveau à l'état d'interruption.

7. Dispositif pyrotechnique (1) selon l'une quelconque des revendications 1 à 6, **caractérisé en ce que** :
- les deuxièmes moyens d'interruption (11) comportent un premier capot (17) amovible, qui peut être rapporté sur le premier boîtier (6) et sur les moyens de détection (3) dans une position de recouvrement, et qui peut être séparé du premier boîtier (6) dans une position de retrait,
- en position de retrait du premier capot (17), la continuité du deuxième tronçon (12) de circuit électrique de mise à feu (4) est interrompue,
- en position de recouvrement du premier capot (17), la continuité du deuxième tronçon (12) de circuit électrique de mise à feu (4) est établie.

8. Dispositif pyrotechnique (1) selon l'une quelconque des revendications 1 à 7, **caractérisé en ce que** :
- les premiers moyens d'interruption (9) comportent un deuxième capot (18) amovible, qui peut être rapporté sur le deuxième boîtier (7) dans une position de recouvrement, et qui peut être séparé du deuxième boîtier (7) dans une position de retrait,
- en position de retrait du deuxième capot (18), la continuité du premier tronçon (10) de circuit électrique de mise à feu (4) est interrompue,
- en position de recouvrement du deuxième capot (18), la continuité du premier tronçon (10) de circuit électrique de mise à feu (4) est établie.

9. Dispositif pyrotechnique (1) selon l'une des revendications 7 ou 8, **caractérisé en ce que** :
- les premiers (9) ou deuxièmes (11) moyens d'interruption du circuit électrique de mise à feu (4) comportent un commutateur (19, 20), connecté en série dans le circuit électrique de mise à feu (4), et rappelé en permanence en position ouverte par des moyens de rappel élastiques (21, 22),
- le premier ou deuxième capot (17, 18) comporte des moyens d'appui (23, 24) qui, lorsqu'on déplace ledit premier (17), respectivement deuxième (18), capot en position de recouvrement, repoussent le commutateur (19, 20) en position fermée à l'encontre des moyens de rappel élastiques (21, 22).

10. Dispositif pyrotechnique (1) selon l'une des revendications 7 ou 8, **caractérisé en ce que** :
- le circuit électrique de mise à feu (4) comprend un tronçon mobile de circuit (25) solidaire du premier (17) ou deuxième (18) capot, et une partie fixe de circuit (26) solidaire du premier (6) ou deuxième (7) boîtier, ladite partie fixe de circuit (26) comportant une interruption (27),
- lorsque le premier (17) ou deuxième (18) capot est en position de recouvrement, le tronçon mobile de circuit (25) est en contact avec la partie fixe de circuit (26) pour établir la continuité du circuit électrique de mise à feu (4) dans la zone de l'interruption (27).

11. Dispositif pyrotechnique (1) selon l'une quelconque des revendications 7 à 10, **caractérisé en ce que** :
- le premier (6) ou deuxième (7) boîtier comporte une face inférieure de posage (6a, 7a) adaptée pour reposer sur le sol (28),
- le premier boîtier (6) et le premier capot (17), ou le deuxième boîtier (7) et le deuxième capot (18), sont conformés et dimensionnés de telle sorte que, lorsque le premier ou deuxième boîtier (6, 7) repose sur le sol (28) et que le premier ou deuxième capot (17, 18) est en position de recouvrement, le premier ou deuxième capot (17, 18) s'oppose à ce qu'un utilisateur puisse saisir manuellement le premier boîtier (6) et les moyens de détection (3) ou le deuxième boîtier (7).

12. Dispositif pyrotechnique (1) selon l'une quelconque des revendications 7 à 11, **caractérisé en ce que** le premier ou deuxième capot (17, 18) comporte une paroi supérieure (17a, 18a) de dimensions telles que ladite paroi supérieure (17a, 18a) déborde tout autour du premier boîtier (6) et des moyens de détection (3) ou du deuxième boîtier (7) selon un dépassement périphérique (P1, P2).

13. Dispositif pyrotechnique (1) selon l'une quelconque des revendications 7 à 12, **caractérisé en ce que** :
- le premier (6) ou deuxième (7) boîtier comporte une face inférieure de posage (6a, 7a) adaptée pour reposer sur le sol (28),
- le premier (17) ou deuxième (18) capot comporte une paroi périphérique latérale (17b, 18b) s'étendant à l'écart de la paroi supérieure (17a, 18a) jusqu'à un bord périphérique inférieur (17c, 18c),
- la paroi périphérique latérale (17b, 18b) du premier (17) ou deuxième (18) capot s'étend selon une hauteur (H1, H2) telle que, lorsque le premier (6) ou deuxième (7) boîtier repose sur le sol (28) et que le premier (17) ou deuxième (18) capot est rapporté respectivement sur le premier (6) ou deuxième (7) boîtier, le bord périphérique inférieur (17c, 18c) est situé au voisinage du niveau de la face inférieure de posage (6a, 7a).

14. Dispositif pyrotechnique (1) selon la revendication 13, **caractérisé en ce que** :
- les moyens de connexion (8) comportent des moyens de conduction électrique souples (29),
- les moyens de connexion (8) pénètrent dans le premier (6) et/ou deuxième (7) boîtier par une entrée (6b, 7b) qui est située à une hauteur (h3, h4) par rapport à la face inférieure de posage (6a, 7a) qui est supérieure à la hauteur (h1, h2) qui sépare le bord périphérique inférieur (17c, 18c) du premier (17) ou deuxième (18) capot du niveau de la face inférieure de posage (6a, 7a).

15. Dispositif pyrotechnique (1) selon l'une quelconque des revendications 1 à 14, **caractérisé en ce que** les moyens de détection (3) comportent un palpeur (32) destiné à être inséré en tout ou partie dans la galerie (34) de l'animal.

16. Dispositif pyrotechnique (1) selon la revendication 15, **caractérisé en ce que** ledit palpeur (32) comprend une pluralité de tronçons séparables (32a-32c) de tige.

17. Dispositif pyrotechnique (1) selon la revendication 15, **caractérisé en ce que** ledit palpeur (32) comprend une tige télescopique.

18. Dispositif pyrotechnique (1) selon l'une quelconque des revendications 1 à 17, **caractérisé en ce que** :
- le premier (6) ou deuxième (7) boîtier comporte une face inférieure de posage (6a, 7a) adaptée pour reposer sur le sol (28),
- le premier (6) ou deuxième (7) boîtier comporte des moyens d'ancrage (30, 31) dans le sol (28), s'étendant depuis la face inférieure de posage (6a, 7a).

## Patentansprüche

1. Pyrotechnische Einrichtung (1), die dazu bestimmt ist, Tiere, die Gänge graben, wie z.B. Maulwürfe, zu zerstören, durch Zünden einer pyrotechnischen Ladung (2), die Detektionsmittel (3) für das Tier aufweist und einen elektrischen Zündschaltkreis (4), der einen Zündschalter (5) enthält, der durch die Detektionsmittel (3) gesteuert ist,
- einen ersten Behälter (6), der dazu bestimmt ist, im Boden (28) installiert zu werden, und der elektrisch mit der pyrotechnischen Ladung (2) verbunden ist und die Detektionsmittel (3) enthält,
**dadurch gekennzeichnet, dass** die pyrotechnische Einrichtung (1) aufweist:
- einen zweiten Behälter (7), der dazu bestimmt ist, im Boden (28) in einem Abstand zu dem ersten Behälter (6) installiert zu werden, der mit dem ersten Behälter (6) durch drahtartige Verbindungsmittel (8) verbunden ist und erste Unterbrechungsmittel (9) des elektrischen Zündschaltkreises (4) aufweist, die dazu ausgebildet sind, einen Unterbrechungszustand und einen Verbindungszustand einzunehmen, die einen ersten Abschnitt (10) des elektrischen Zündschaltkreises (4) unterbrechen oder eine Verbindung herstellen.

2. Pyrotechnische Einrichtung (1) nach Anspruch 1, **dadurch gekennzeichnet, dass** die Verbindungsmittel (8) zwischen dem ersten (6) und dem zweiten (7) Behälter starr sind.

3. Pyrotechnische Einrichtung (1) nach einem der Ansprüche 1 oder 2, **dadurch gekennzeichnet, dass** sich die Verbindungsmittel (8) zwischen dem ersten (6) und dem zweiten (7) Behälter über eine Länge von mindestens ungefähr 1 Meter erstrecken.

4. Pyrotechnische Einrichtung (1) nach irgendeinem der Ansprüche 1 bis 3, **dadurch gekennzeichnet, dass** der zweite Behälter (7) eine Quelle für elektrische Energie (37) aufweist, zur Speisung des elektrischen Zündschaltkreises (4), die vorzugsweise in einem Fach (7c) des zweiten Behälters (7) herausnehmbar angeordnet ist.

5. Pyrotechnische Einrichtung (1) nach irgendeinem der Ansprüche 1 bis 4, **dadurch gekennzeichnet, dass** der erste Behälter (6) zweite Unterbrechungsmittel (11) für den elektrischen Zündschaltkreis (4) aufweist, die dazu ausgebildet sind, selektiv einen Unterbrechungszustand und einen Verbindungszustand einzunehmen, bei dem ein zweiter Abschnitt (12) des elektrischen Zündschaltkreises (4) unterbrochen ist oder einen Verbindungszustand einnimmt.

6. Pyrotechnische Einrichtung (1) nach Anspruch 5, **dadurch gekennzeichnet, dass**:
- sie Sperrmittel (13) für den elektrischen Zündschaltkreis (4) aufweist, die durch Steuerungsmittel (14) gesteuert sind,
- sie Detektionsmittel (15, 16) für den Zustand der ersten Unterbrechungsmittel (9) und der zweiten Unterbrechungsmittel (11) aufweist,
- wobei, wenn die ersten Unterbrechungsmittel (9) vom Unterbrechungszustand zu dem Verbindungszustand umschalten, obwohl die zweiten Unterbrechungsmittel (11) im Unterbrechungsstand sind, die Steuerungsmittel (14) die Sperrmittel (13) so steuern, dass der elektrische Zündschaltkreis (4) gesperrt ist, bis die ersten (9) und zweiten (11) Unterbrechungsmittel erneut im Unterbrechungszustand sind.

7. Pyrotechnische Einrichtung (1) nach irgendeinem der Ansprüche 1 bis 6, **dadurch gekennzeichnet, dass**:
- die zweiten Unterbrechungsmittel (11) eine erste abnehmbare Haube (17) aufweisen, die auf den ersten Behälter (6) und auf die Detektionsmittel (3) in eine bedeckende Position aufgesetzt werden können und die von dem ersten Behälter (6) in eine Abnahmeposition getrennt werden können,
- wobei in der Abnahmeposition der ersten Haube (17) die Verbindung des zweiten Abschnittes (12) des elektrischen Zündschaltkreises (4) unterbrochen ist,
- wobei in der Abdeckposition der ersten Haube (17) die Verbindung des zweiten Abschnittes (12) des elektrischen Zündschaltkreises (4) hergestellt ist.

8. Pyrotechnische Einrichtung (1) nach irgendeinem der Ansprüche 1 bis 7, **dadurch gekennzeichnet, dass**:
- die ersten Unterbrechungsmittel (9) eine zweite abnehmbare Haube (18) aufweisen, die auf den zweiten Behälter (7) in eine Abdeckposition aufsetzbar ist und die von dem zweiten Behälter (7) in eine Abnahmeposition trennbar ist,
- wobei in der Abnahmeposition der zweiten Haube (18) die Verbindung des ersten Abschnittes (10) des elektrischen Zündschaltkreises (4) unterbrochen ist,
- wobei in der Abdeckposition der zweiten Haube (18) die Verbindung des ersten Abschnittes (10) des elektrischen Zündschaltkreises (4) hergestellt ist.

9. Pyrotechnische Einrichtung (1) nach irgendeinem der Ansprüche 7 oder 8, **dadurch gekennzeichnet, dass**:
- die ersten (9) oder zweiten (11) Unterbrechungsmittel des elektrischen Zündschaltkreises (4) einen Schalter (19, 20) aufweisen, der in Reihe mit dem elektrischen Zündschaltkreis (4) geschaltet ist und permanent durch elastische Rückstellmittel (21, 22) in einer Öffnungsstellung gehalten ist,
- wobei die erste oder zweite Haube (17, 18) Anschlagmittel (23, 24) aufweist, die bei Verschiebung der ersten (17) beziehungsweise der zweiten (18) Haube in die Abdeckposition den Schalter (19, 20) in eine Schließstellung gegen die elastischen Rückstellmittel (21, 22) zurückstoßen.

10. Pyrotechnische Einrichtung (1) nach einem der Ansprüche 7 oder 8, **dadurch gekennzeichnet, dass**:
- der elektrische Zündschaltkreis (4) einen beweglichen Schaltkreisabschnitt (25) aufweist, der mit der ersten (17) oder zweiten (18) Haube verbunden ist, und einen festen Schaltkreisteil (26), der mit dem ersten (6) oder zweiten (7) Behälter verbunden ist, wobei der feste Schaltkreisteil (26) eine Unterbrechung (27) aufweist,
- wobei, wenn die erste (17) oder zweite (18) Haube in der Abdeckposition ist, der bewegliche Schaltkreisabschnitt (25) in Kontakt mit dem festen Schaltkreisteil (26) ist, um eine Verbindung des elektrischen Zündschaltkreises (4) in der Unterbrechungszone (27) herzustellen.

11. Pyrotechnische Einrichtung (1) nach irgendeinem der Ansprüche 7 bis 10, **dadurch gekennzeichnet, dass**:
- der erste (6) oder zweite (7) Behälter eine untere Halterungsfläche (6a, 7a) aufweist, die dazu ausgebildet ist, auf dem Boden (28) aufzuliegen,
- wobei der erste Behälter (6) und die erste Haube (17) oder der zweite Behälter (7) und die zweite Haube (18) so ausgebildet und dimensioniert sind, dass bei Aufliegen des ersten oder zweiten Behälters (6, 7) auf dem Boden (28) und wenn die erste oder die zweite Haube (17, 18) in der Abdeckposition sind, die erste oder zweite Haube (17, 18) sich widersetzt, dass ein Benutzer den ersten Behälter (6) und die Detektionsmittel (3) oder den zweiten Behälter (7) manuell ergreifen kann.

12. Pyrotechnische Einrichtung (1) nach irgendeinem der Ansprüche 7 bis 11, **dadurch gekennzeichnet, dass** die erste oder zweite Haube (17, 18) eine obere Wand (17a, 18a) aufweist von solcher Dimension, dass die genannte obere Wand (17a, 18a) vollständig über den ersten Behälter (6) und die Detektionsmittel (3) oder den zweiten Behälter (7) längs eine peripheren Überstandes (P1, P2) übersteht.

13. Pyrotechnische Einrichtung (1) nach irgendeinem der Ansprüche 7 bis 12, **dadurch gekennzeichnet, dass**:
- der erste (6) oder zweite (7) Behälter eine untere Halterungsfläche (6a, 7a) aufweist, die dazu ausgebildet ist, auf dem Boden (28) aufzuliegen,
- die erste (17) oder zweite (18) Haube eine seitliche periphere Wand (17b, 18b) aufweist, die sich in einem Abstand zu der oberen Wand (17a, 18a) erstreckt, bis zu einem unteren peripheren Rand (17c, 18c),
- wobei sich die seitliche periphere Wand (17b, 18b) der ersten (17) oder zweiten (18) Haube über eine Höhe (H1, H2) so erstreckt, dass, wenn der erste (6) oder zweite (7) Behälter auf dem Boden (28) aufliegt und die erste (17) oder zweite (18) Haube auf den ersten (6) oder zweiten (7) Behälter aufgesetzt ist, der untere periphere Rand (17c, 18c) in der Nachbarschaft des Niveaus der unteren Halterungsfläche (6a, 7a) gelegen ist.

14. Pyrotechnische Einrichtung (1) nach Anspruch 13, **dadurch gekennzeichnet, dass**:
- die Verbindungsmittel (8) biegsame elektrische Verbindungsmittel (29) aufweisen,
- die Verbindungsmittel (8) durch einen Einlass (6b, 7b) des ersten (6) und/oder zweiten (7) Behälters eindringen, der in einer Höhe (h3, h4) bezüglich der unteren Halterungsfläche (6a, 7a) gelegen ist, die in Bezug auf die Höhe (h1, h2), die den unteren peripheren Rand (17c, 18c) der ersten (17) oder zweiten (18) Haube von dem Niveau der unteren Halterungsfläche (6a, 7a) trennt, höher gelegen ist.

15. Pyrotechnische Einrichtung (1) nach irgendeinem der Ansprüche 1 bis 14, **dadurch gekennzeichnet, dass** die Detektionsmittel (3) einen Taster (32) aufweisen, der dazu bestimmt ist, ganz oder teilweise in den Gang (34) des Tieres eingesetzt zu werden.

16. Pyrotechnische Einrichtung (1) nach Anspruch 15, **dadurch gekennzeichnet, dass** der genannte Taster (32) eine Vielzahl von trennbaren Stangenteilen (32a-32c) aufweist.

17. Pyrotechnische Einrichtung (1) nach Anspruch 15, **dadurch gekennzeichnet, dass** der genannte Taster (32) eine teleskopartige Stange aufweist.

18. Pyrotechnische Einrichtung (1) nach irgendeinem der Ansprüche 1 bis 17, **dadurch gekennzeichnet, dass**:
- der erste (6) oder zweite (7) Behälter eine untere Halterungsfläche (6a, 7a) aufweist, die zur Auflage auf dem Boden (28) ausgebildet ist,
- der erste (6) oder zweite (7) Behälter Verankerungsmittel (30, 31) auf dem Boden (28) aufweist, der sich von der unteren Halterungsfläche (6a, 7a) erstreckt.

## Claims

1. Pyrotechnic device (1) intended for the destruction of animals digging tunnels such as moles by the firing of a pyrotechnic charge (2), comprising means (3) for detecting the animal and an electrical firing circuit (4) comprising a firing contactor (5) driven by the detection means (3),
- a first housing (6) intended to be installed on the ground (28), electrically connected to the pyrotechnic charge (2) and comprising the detection means (3),
**characterized in that** the pyrotechnic device (1) comprises:
- a second housing (7) intended to be installed on the ground (28) at a distance from the first housing (6), linked to the first housing (6) via wired connection means (8), and comprising first means (9) for breaking the electrical firing circuit (4) that can assume a breaking state and a continuity state which respectively break or establish the continuity of a first section (10) of the electrical firing circuit (4).

2. Pyrotechnic device (1) according to claim 1, **characterized in that** the connection means (8) between the first (6) and second (7) housings are rigid.

3. Pyrotechnic device (1) according to one of claims 1 or 2, **characterized in that** the connection means (8) extend between the first (6) and the second (7) housings by a length of at least one meter approximately.

4. Pyrotechnic device (1) according to any one of claims 1 to 3, **characterized in that** the second housing (7) comprises an electrical power source (37) for the electrical firing circuit (4), preferably arranged to be removable in a recess (7c) of the second housing (7).

5. Pyrotechnic device (1) according to any one of claims 1 to 4, **characterized in that** the first housing (6) comprises second means (11) for breaking the electrical firing circuit (4) which can selectively assume a breaking state and a continuity state which respectively break or establish the continuity of a second section (12) of the electrical firing circuit (4).

6. Pyrotechnic device (1) according to claim 5, **characterized in that**:
- it comprises means (13) for disabling the electrical firing circuit (4), driven by control means (14),
- it comprises means (15, 16) for detecting the state of the first breaking means (9) and of the second breaking means (11),
- when the first breaking means (9) switch from the breaking state to the continuity state while the second breaking means (11) are in the breaking state, the control means (14) drive the disabling means (13) to disable the electrical firing circuit (4) until the first (9) and second (11) breaking means are once again in the breaking state.

7. Pyrotechnic device (1) according to any one of claims 1 to 6, **characterized in that**:
- the second breaking means (11) include a first removable cover (17), which can be fitted over the first housing (6) and over the detection means (3) in a covering position, and which can be separated from the first housing (6) in a removed position,
- in the removed position of the first cover (17), the continuity of the second section (12) of the electrical firing circuit (4) is broken,
- in the covering position of the first cover (17), the continuity of the second section (12) of the electrical firing circuit (4) is established.

8. Pyrotechnic device (1) according to any one of claims 1 to 7, **characterized in that**:
- the first breaking means (9) include a second removable cover (18), which can be fitted over the second housing (7) in a covering position, and which can be separated from the second housing (7) in a removed position,
- in the removed position of the second cover (18), the continuity of the first section (10) of the electrical firing circuit (4) is broken,
- in the covering position of the second cover (18), the continuity of the first section (10) of the electrical firing circuit (4) is established.

9. Pyrotechnic device (1) according to one of claims 7 or 8, **characterized in that**:
- the first (9) or second (11) means for breaking the electrical firing circuit (4) comprise a switch (19, 20), connected in series in the electrical firing circuit (4), and permanently returned to the open position by elastic return means (21, 22),
- the first or second cover (17, 18) includes bearing means (23, 24) which, when said first (17), respectively second (18), cover is displaced to the covering position, push back the switch (19, 20) to the closed position against the elastic return means (21, 22).

10. Pyrotechnic device (1) according to one of claims 7 or 8, **characterized in that**:
- the electrical firing circuit (4) comprises a movable circuit section (25) attached to the first (17) or second (18) cover, and a fixed circuit part (26) attached to the first (6) or second (7) housing, said fixed circuit part (26) including a break (27),
- when the first (17) or second (18) cover is in the covering position, the movable circuit section (25) is in contact with the fixed circuit part (26) to establish the continuity of the electrical firing circuit (4) in the area of the break (27).

11. Pyrotechnic device (1) according to any one of claims 7 to 10, **characterized in that**:
- the first (6) or second (7) housing has a bottom laying face (6a, 7a) suitable for resting on the ground (28),
- the first housing (6) and the first cover (17), or the second housing (7) and the second cover (18), are conformed and dimensioned so that, when the first or second housing (6, 7) rests on the ground (28) and the first or second cover (17, 18) is in the covering position, the first or second cover (17, 18) prevents a user from being able to manually grasp the first housing (6) and the detection means (3) or the second housing (7).

12. Pyrotechnic device (1) according to any one of claims 7 to 11, **characterized in that** the first or second cover (17, 18) includes a top wall (17a, 18a) of dimensions such that said top wall (17a, 18a) juts out all around the first housing (6) and the detection means (3) or the second housing (7) by a peripheral overhang (P1, P2).

13. Pyrotechnic device (1) according to any one of claims 7 to 12, **characterized in that**:
- the first (6) or second (7) housing includes a bottom laying face (6a, 7a) suitable for resting on the ground (28),
- the first (17) or second (18) cover includes a lateral peripheral wall (17b, 18b) extending away from the top wall (17a, 18a) to a bottom peripheral edge (17c, 18c),
- the lateral peripheral wall (17b, 18b) of the first (17) or second (18) cover extend by a height (H1, H2) such that, when the first (6) or second (7) housing rests on the ground (28) and the first (17) or second (18) cover is fitted respectively on the first (6) or second (7) housing, the bottom peripheral edge (17c, 18c) is located in the vicinity of the level of the bottom laying face (6a, 7a).

14. Pyrotechnic device (1) according to claim 13, **characterized in that**:
- the connection means (8) include flexible electrical conduction means (29),
- the connection means (8) penetrate into the first (6) and/or second (7) housing through an entry (6b, 7b) which is situated at a height (h3, h4) relative to the bottom laying face (6a, 7a) which is greater than the height (h1, h2) which separates the bottom peripheral edge (17c, 18c) of the first (17) or second (18) cover from the level of the bottom laying face (6a, 7a).

15. Pyrotechnic device (1) according to any one of claims 1 to 14, **characterized in that** the detection means (3) comprise a feeler (32) intended to be wholly or partly inserted into the tunnel (34) of the animal.

16. Pyrotechnic device (1) according to claim 15, **characterized in that** said feeler (32) comprises a plurality of separable rod sections (32a-32c).

17. Pyrotechnic device (1) according to claim 15, **characterized in that** said feeler (32) comprises a telescopic rod.

18. Pyrotechnic device (1) according to any one of claims 1 to 17, **characterized in that**:
- the first (6) or second (7) housing includes a bottom laying face (6a, 7a) suitable for resting on the ground (28),
- the first (6) or second (7) housing includes means (30, 31) for anchoring in the ground (28), extending from the bottom laying face (6a, 7a).
